# EUROPEAN PATENT SPECIFICATION

(11) **EP 3 943 347 B1**
(45) Date of publication and mention of the grant of the patent: **17.01.2024**
(21) Application number: 20187276.9
(22) Date of filing: 22.07.2020
(51) Int. Cl.: B60S 1/34, B60S 1/52

(54) **WIPER ARM WITH LATERAL NOZZLE**
WISCHERARM MIT SEITLICHER DÜSE
BRAS D'ESSUIE-GLACE À BUSE LATÉRALE

(43) Date of publication of application: 26.01.2022
(73) Proprietor: Valeo Autosystemy SP. Z.O.O., 32-050 Skawina (PL)
(72) Inventor: SZYMANEK, Przemyslaw, 32050 SKAWINA (PL); JABLECKI, Sebastian, 32050 SKAWINA (PL); OSTROGORSKI, Tomasz, 32050 SKAWINA (PL)
(74) Representative: Valeo Visibility

(56) References cited:
- EP-A1- 1 520 759
- DE-A1- 2 113 506
- DE-C1- 19 826 846
- FR-A1- 2 684 343
- FR-A1- 2 691 933
- FR-A1- 2 995 851
- US-A- 3 418 676
- US-A- 3 427 675
- US-A- 5 327 614

## Description

The present invention concerns the domain of wiping devices for a vehicle, and concerns more particularly a wiper arm for such wiping devices and which includes a spraying device.

Generally, a wiping device for a vehicle comprises at least a wiper arm which makes an angular back and forth motion. Such wiper arm is linked to a wiper blade which is in contact with the glazed surface. The wiper blade is set in motion by the wiper arm and wipes and/or cleans the glazed surface if it's dirty or in case of raining weather.

In order to ensure the cleaning of the glazed surface, the wiping device comprises a spraying device which is able to spray a liquid on the glazed surface by at least a nozzle. Several embodiments of such spraying device exist, including a spraying device arranged at the wiper arm level. Other alternatives exist like the integration of such spraying device at the base of the glazed surface or inside the structure of the wiper blade.

It is known to arrange the nozzle on a drive member of the wiper arm. Nevertheless, in such position, the nozzle sprays the liquid according to a trajectory which isn't optimal to ensure a proper cleaning of the whole area of the glazed surface.

Other examples of wiping device are described in the documents DE2113506, FR2684343, DE19826846, FR2691933, US5327614, FR2995851, US3418676, EP1520759 and US3427675.

The present invention is defined in claim 1, and solves this problem by providing a wiper arm for a wiping device of a vehicle, comprising a longitudinal part and a drive member linked one another by a pivot linkage, the longitudinal part comprising a first end which is linked to the drive member and a second end opposed to the first end, the drive member being configured to be linked to a rotating shaft which is able to set the wiper arm in motion, characterized in that the wiper arm comprises at least a spraying device configured to spray a liquid on a glazed surface and a duct hydraulically linked with the spraying device, such spraying device being arranged on the longitudinal part closer to the first end than to the second end of the longitudinal part, such duct extends along the drive member and being configured to connect a pipe which is arranged inside the rotating shaft to the spraying device.

With the nozzle arranged on the longitudinal part of the wiper arm, the spraying device is able to spray some liquid simultaneously with the motion of the wiper arm. In this situation, the nozzle is arranged remotely from a rotation axis of the shaft. Indeed, a nozzle arranged too close to the rotation axis sprays the liquid according to a tight trajectory which doesn't correctly cover the glazed surface. Thus, the wiper arm according to the invention is able to spray the liquid according to a trajectory which allows to correctly spread the sprayed liquid on the glazed surface. In others words, such nozzle can be stationary or only rotatory around a rotation axis of the rotating shaft.

The drive member of the wiper arm is linked to the rotating shaft. More particularly, such rotating shaft moves according to a reversible rotative motion. In other words, the rotating shaft turns around its own rotation axis, alternatively in a clockwise and a counterclockwise direction. This alternation leads to the back and forth movement of the drive member. The drive member being attached to the longitudinal part, the wiper arm is set in such back and forth motion thanks to the motion of the rotating shaft.

The pivot linkage is arranged between the drive member and the first end of the longitudinal part. The function of this pivot linkage is to authorize the raise up of the wiper arm, for example in order to give an access for removing a wiper blade when it becomes worn. The second end of the longitudinal part can comprise some fixation means in order to carry such wiper blade.

The liquid which is sprayed against the glazed surface comes from a liquid tank and circulates inside the rotating shaft. The latter being hollowed, a pipe is formed inside it and the liquid circulates until the drive member. Thereafter, the liquid passing by the duct reaches the spraying device.

Such spraying device is included in the longitudinal part of the wiper arm, more particularly in the first end of the wiper arm. Thus, the spraying device is arranged closer to the first end of the longitudinal part than to the second end of the longitudinal part, that is to say closer to the drive member than to the second end.

The duct can be a rubber tube which links the pipe to the spraying device. Thus, the duct can be deformable and doesn't cause mechanical interferences when the longitudinal part is swiveled in order to change the wiper blade.

According to an aspect of the invention, the spraying device comprises at least a channel and at least a nozzle, such channel being formed in the material constitutive of the first end of the longitudinal part. It is by the nozzle that the liquid is sprayed against the glazed surface. The nozzle can be arranged in a housing which can be molded in the longitudinal part. The nozzle can be angled inside the housing in order to adjust a direction of the spraying of the liquid.

The channel is extended inside the longitudinal part until the nozzle. The channel can be molded in the material of the longitudinal part. Thus, the liquid circulates inside the pipe, goes through the duct and circulates inside the channel formed in the longitudinal part until be sprayed by the nozzle.

According to an aspect of the invention, the longitudinal part comprises two lateral walls linked to each other by an upper wall, the nozzle being arranged in at least one of the lateral walls. In other words, the longitudinal part has the form of a U in a viewing angle parallel to the main dimension of the longitudinal part, the upper wall being the part of the U which is the furthest from the glazed surface. The upper wall is configured to be slightly parallel to the glazed surface whereas each lateral wall is slightly parallel between them and are configured to be slightly perpendicular to the glazed surface.

The wiper arm according to the invention can have a plurality of nozzles which are arranged in only one of the lateral walls or in both lateral walls.

According to an aspect of the invention, the channel comprises a main channel hydraulically linked to the duct, the channel comprising at least a secondary channel which links the main channel to the nozzle. The main channel is extended in the first end of the of the longitudinal part, in a direction parallel to the main direction of the longitudinal part. The main channel is in the extension of the duct and allows to bring the liquid nearby the nozzle. The communication between the main channel and the nozzle is made by the secondary channel. The number of secondary channels is at least equal to the number of nozzles arranged in the spraying device, each secondary channel being extended from the main channel in order to lead the liquid to each nozzle. Nevertheless, it is possible that some secondary channels aren't used. In this case, the nozzle is replaced by a sphere which prevent a leak of the liquid by such non-used secondary channel.

According to an aspect of the invention, the main channel and the secondary channel extend according to a rectilinear direction, a direction of the secondary channel being secant to a direction of the main channel. In other words, each channel is extended in a main direction, the direction of the secondary channel being oriented differently from the direction of the main channel. In order to have the liquid circulating from the main channel to the secondary channel, the latter has to be angled to be secant to the main channel and can communicate with it.

According to the invention, the first end of the longitudinal part is interlocked with the drive member to form the pivot linkage, the longitudinal part comprising a mouthpiece arranged on the first end, such mouthpiece allowing to connect the duct with the longitudinal part. The first end of the longitudinal part is sandwiched by the sides of the drive member in order to form the pivot linkage thanks to a fixation mean which allows the swiveling of the longitudinal part in relation to the drive member.

The mouthpiece and the duct form the hydraulic link between the longitudinal part and the duct. Thus, the mouthpiece can be considered as a continuation of the main channel, aside of said main channel. The mouthpiece emerges from the longitudinal part, out of a surface facing the drive member. The mouthpiece can be configured to receive the duct by mounting one another, for example. The mouthpiece can comprise a gasket in order to avoid any leakages of the liquid.

According to the invention, the drive member comprises a clearance zone which authorizes a move of the mouthpiece in order to not interfere with the drive member. As described before, the longitudinal part, and the mouthpiece by analogy, can swivel in order to operate a change of the wiper blade. The mouthpiece emerging from the first end of the longitudinal part, it risks to touch the drive member or to rub against it during the swiveling of the longitudinal part. The clearance zone is created in the material of the drive member. Thus, when the longitudinal part is swiveling, the clearance zone authorizes the swiveling of the mouthpiece without mechanical interferences. The duct being expandable, the swiveling of the mouthpiece doesn't cause a break or a disconnection of the duct.

According to an aspect of the invention, the drive member comprises a gutter in order to authorize the passage of the duct. In such situation, the duct can't be arranged between the pipe and the mouthpiece. That's why the gutter has to be formed in the material of the drive member. The duct is put in the gutter to avoid any mechanical interferences between the drive member and the duct.

According to an aspect of the invention, the duct comprises a connector configured to be arranged to the rotating shaft. Such connector allows to join the pipe of the rotating shaft to the duct. The connector can be curved in order to limit a mechanical extension of the drive member.

According to an aspect of the invention, the connector comprises a cavity which is configured to lead the liquid coming from the pipe of the rotating shaft to the duct. In other words, the liquid circulates inside the connector to join the duct.

The invention also claims a wiping device for a glazed surface of a vehicle, comprising a wiper arm as described above and a wiper blade, the second end of the longitudinal part of the wiper arm being adapted to carry the wiper blade.

The glazed surface can be any surface of the vehicle. However, the wiping device according to the invention is particularly appropriated for a rear windshield.

Thus, the longitudinal part of the wiper arm is interposed between, as well as directly linked, to the drive member, on one side, and to the wiper blade, on the other side.

The pivot linkage between the drive member and the first end of the longitudinal part ensures that the wiper blade is forced against the glazed surface and wipes correctly the latter whatever its position on the glazed surface.

Other features, details and advantages of the invention can be inferred from the specification of the invention given hereunder. Various embodiments are represented in the figures wherein:
[fig 1] is a general view of a wiping device according to the invention operating on a glazed surface,
[fig 2] is a side view of a longitudinal part of a wiper arm,
[fig 3] is an exploded view of elements which allow the circulation of a liquid from a pipe of a rotating shaft to a nozzle,
[fig 4] is a perspective view of the pivot linkage between the longitudinal part of the wiper arm and a drive member of the wiper arm,
[fig 5] is a view of trajectories of the sprayed liquid on the glazed surface by a nozzle disposed as in the prior art,
[fig 6] is a view of trajectories of the sprayed liquid on the glazed surface by a wiping device according to the invention.

The orthogonal system LVT represents the orientation of the wiper arm. The vertical axis corresponds to an axis parallel to a rotating shaft which set the wiper arm in motion, and the longitudinal axis L and the transversal axis T correspond to perpendicular axis of the vertical axis V.

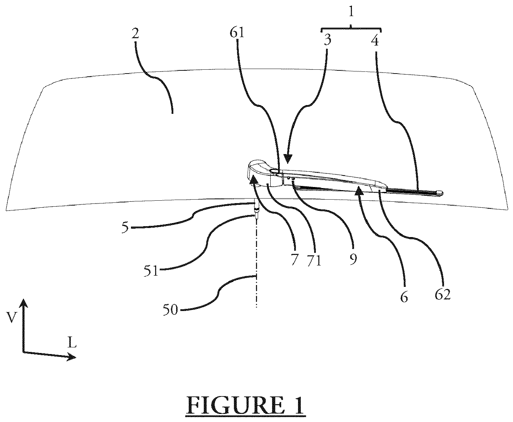

The figure 1 represents a wiper arm 3 according to the invention. The wiper arm 3 is configured to be arranged in a wiping device 1. The latter is configured to wipe a glazed surface 2 in a vehicle. The glazed surface 2 can be for example a front windshield or a rear windshield of said vehicle. The glazed surface 2 can be in glass, in plexiglas, or in any transparent material. The wiping device 1 has the function to wipe the glazed surface 2 in order to maintain a good visibility if a user of the vehicle is watching trough the glazed surface 2.

The wiper arm 3 is linked to a rotating shaft 5 on the one hand, and to a wiper blade 4 on the other hand. The rotating shaft 5 is set in motion, for example by a drive motor or by linkage, which is not represented on the figure 1, around a rotation axis 50. In the figure 1, the rotation axis 50 is parallel to a vertical axis V, but the rotation axis 50 can be inclined in comparison with the vertical axis V. In order to be linked to the wiper arm 3, the rotating shaft 5 may cross the glazed surface 2. Alternatively, the rotation shaft 5 may cross an element of the vehicle that is surrounding the glazed surface 2.

The rotating shaft 5 is set in motion according to a reversible rotative motion. In other words, the rotating shaft 5 turns around its rotation axis 50, alternating a clockwise direction and a counterclockwise direction. The rotating shaft 5 being linked to the wiper arm 3, the latter is set in a back and forth motion.

The wiper blade 4 is in direct contact with the glazed surface 2 in order to wipe it. When the wiper arm 3 of the invention is set in the back and forth motion by the rotating shaft 5, the wiper arm 3 carries the wiper blade 4 which also moves according to the same back and forth motion. Thus, the wiper blade 4 is set in motion and wipes the glazed surface 2. The wiper arm 3 is configured to maintain the wiper blade 4 firmly in contact with the glazed surface 2 in order to ensure an efficient wiping of it.

The wiper arm 3 of the invention is divided in two parts: a longitudinal part 6 and a drive member 7. The longitudinal part 6 carries the wiper blade 4 whereas the drive member 7 is mechanically linked to the rotating shaft 5. In the figure 1, the longitudinal part 6 is mainly extended parallel to the longitudinal axis L.

The longitudinal part 6 comprises a first end 61 and a second end 62 which are arranged to each end of the main dimension of the longitudinal part 6, that is to say the longitudinal axis L. The first end 61 is linked to the drive member 7, whereas the second end 62 carries the wiper blade 4. The first end 61 and the drive member 7 are linked by a pivot linkage which will be described in details later.

The drive member 7 sets the longitudinal part 6 in motion thanks to the linkage between them. In the figure 1, the drive member 7 is integrally protected by a cover 71. The content of the drive member 7 under the cover 71 will be described in details later.

A pipe 51 is inserted inside the rotating shaft 5, around the rotation axis 50. The pipe 51 has to be dimensioned in order to be inserted inside the rotating shaft 5 and said pipe 51 is a distinct part of the rotating shaft 5. The pipe 51 is configured to bring some liquid until the wiper arm 3, more particularly until the drive member 7. Such liquid can be some water or a cleaning liquid, for example. The pipe 51 can extend until a liquid tank, which is not represented on figure 1. When the glazed surface 2 needs to be clean, the liquid can be led from the liquid tank to the pipe 51, for example thanks to a pump which is not represented in the figure 1.

Thereafter, the liquid circulates along the drive member 7, and then inside the wiper arm 3 until a nozzle 9. The nozzle 9 is configurated to spray the liquid against the glazed surface 2. When the liquid reaches the top of the pipe 51, it is led along the drive member 7 and the first end 61 of the longitudinal part 6 until the nozzle 9.

The nozzle 9 is arranged closer to the first end 61 than to the second end 62 of the longitudinal part 6. Such positioning allows an efficient spraying on the glazed surface 2 as long as the nozzle 9 is arranged on the part 61. For example, the positioning of the nozzle 9 on the first end 61 of the longitudinal part 6 can depend on the geometry of the glazed surface 2. The spraying may be operated at the same time than the wiper arm 3 is set in motion by the rotating shaft 5. Thus, the liquid is sprayed on the glazed surface 2 and the wiper blade 4 cleans the glazed surface 2 wiping the liquid on it. Such operation may continue until that the motion of the rotating shaft 5 is stopped and that the circulation of the liquid is cut off.

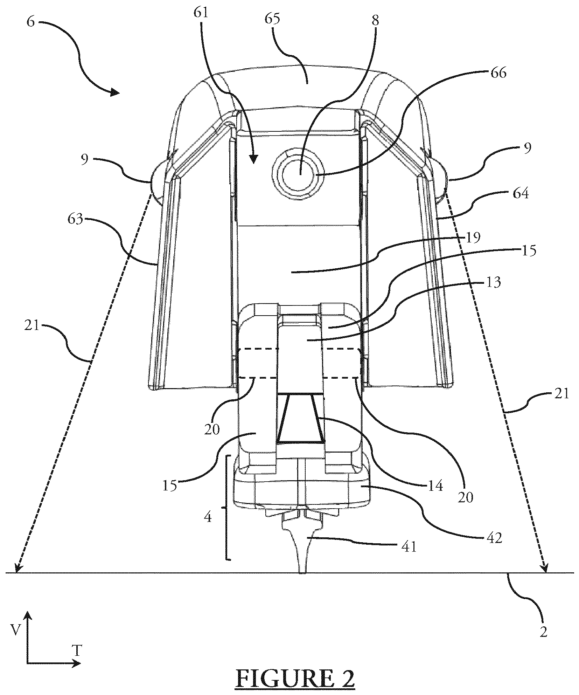

The figure 2 is a view of the longitudinal part 6 and the wiper blade 4. The angle of view is parallel to the longitudinal axis, facing the first end 61 of the longitudinal part 6.

The longitudinal part 6 comprises a first lateral wall 63 and a second lateral wall 64 which are slightly parallel between them. The first lateral wall 63 and the second lateral wall 64 are linked by an upper wall 65. The two lateral walls 63, 64 and the upper wall 65 are mainly extending parallel to the longitudinal axis. Two nozzles 9 emerge from each lateral wall 63, 64. Thus, the liquid is sprayed on the glazed surface by both lateral walls 63, 64 of the longitudinal part 6. The nozzles 9 are arranged on an upper portion of the lateral walls 63, 64, closely to the upper wall 65, in order to maximize a height of spraying in comparison with the glazed surface and to ensure an optimal angle of spraying.

The figure 2 allows to observe the entry of a channel 8. It is by this channel 8 that the liquid enters in the material of the longitudinal part and is sprayed by the nozzles 9. The channel 8 and each nozzle 9 are hydraulically linked as it will be describing thereafter. The entry of the channel 8 comprises a mouthpiece 66 which allows a connection between the channel 8 and a duct in order to lead the liquid from the rotating shaft to each nozzle 9. Each nozzle 9 sprays a liquid spraying 21 on the glazed surface 2.

The first end 61 of the longitudinal part 6 comprises, a recess 19 and an empty zone 13 framed by two bearings 15. The recess 19 and the two bearings 15 participates to the pivot linkage when the drive member is connected to the longitudinal part 6. Thus, the longitudinal part 6 and the drive member can be in contact one to another in a form-fitting manner, keeping free a rotation movement between each other. The drive member is in contact with the two bearings 15 and comprises a branch which lodges into the recess 19. The longitudinal part 6 and the drive member are linked by a rod which is extended through a hole 20 in both bearings 15. All the details concerning the pivot linkage will be describing thereafter. The empty zone 13 between the two bearings 15 can be created in order to put a spring, for example. Such spring, which is not represented in the figure 2, can have the function to push the wiper blade 4 against the glazed surface 2.

The perspective view allows to observe the wiper blade 4, although it is connected to the second end of the longitudinal part 6. In order to carry the wiper blade 4, the longitudinal part 6 comprises an adapter 14 which makes the junction between the wiper arm 6 and the wiper blade 4. The adapter 14 can be any adapter which is able to attach remotely the wiper blade 4 onto the second end of the wiper arm 6.

The wiper blade 4 comprises a rubber blade 41. It is this rubber blade 41 which is in contact with the glazed surface 2 and which wipes it. The rubber blade 41 is in contact with the glazed surface 2. The wiper blade 4 also comprises an end cap 42 which maintains a plurality of elements of the wiper blade 4 interlocked into each other.

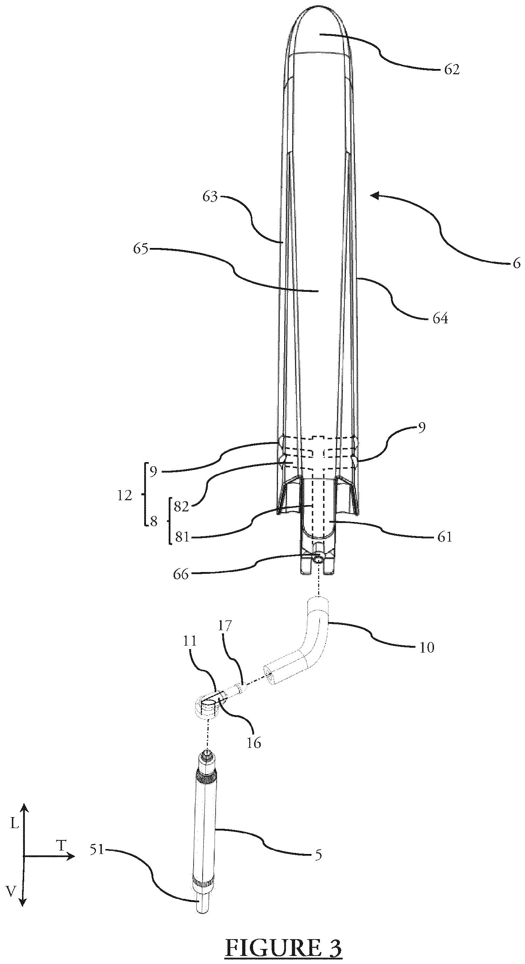

The figure 3 is an exploded view of different elements of the wiper arm which illustrates the circulation of the liquid from the pipe 51 of the rotating shaft 5 until its spraying by the nozzles 9. The drive member of the wiper arm is not represented in the figure 3 for clarity reasons, but this drive member is interposed between the rotating shaft and the first end 61 of the wiper arm 6. It's possible to see on the figure 3 that the first end 61 of the longitudinal part is less large that the rest of the longitudinal part 6.

As shown in the figure 3, the pipe 51 is inside the rotating shaft 5 and is extended until the drive member. A connector 11 is fixed to the end of the pipe 51. The connector 11 can be screwed on the pipe 51, which can comprise a screw thread.

The connector 11 comprises a cavity 16 and a termination 17. The cavity 16 can be molded inside the connector 11 and is a chamber that can be filled with the liquid. The termination 17 is arranged in communication with the cavity 16 and consists in an element which is comparable to the mouthpiece 66 of the longitudinal part 6.

The termination 17 and the mouthpiece 66 are linked by a duct 10. The duct 10 is flexible and is mounted in force around the termination 17 and around the mouthpiece 66. Thus, the liquid can join the longitudinal part 6 from the drive member passing by the duct 10. The hydraulic connections between the termination 17 and the duct 10 and between the duct 10 and the mouthpiece 66 can be organized by a gasket arranged on the termination 17 and/or the mouthpiece 66 in order to prevent any leak of the liquid by the duct 10. The expandability of the duct 10 can also allow the tightness by itself, adjusting around the termination 17 and the mouthpiece 66 by clamping.

Thanks to the duct 10, the liquid can enter into the channel 8, which is visible in the figure 2. The channel 8 is extended in the material of the longitudinal part 6 and represented in dotted lines. The channel 8 is divided into a main channel 81 and at least one secondary channel 82.

The main channel 81 is extended along the first end 61 of the longitudinal part, in a rectilinear direction parallel to the longitudinal axis L. The secondary channel 82 has the function to create a connection between the main channel 81 and a dedicated nozzle 9. In figure 3, there are four nozzles 9, at the rate of two nozzles 2 for each lateral wall 63, 64 of the longitudinal part 6. In this specific example, there are also four secondary channels 82 which are extended from the main channel 81 to a nozzle 9, each secondary channel 82 being extended according to a rectilinear direction and being secant to the main channel 81. The figure 3 shows four nozzles 9, however the longitudinal part can comprise any number of nozzles in function of the need.

The channel 8 and at least one nozzle 9 form together the spraying device 12. The spraying device 12 or only the channel 8 can be molded in the material of the longitudinal part 6 and ensures the spraying of the liquid on the glazed surface. In the situation of only the channel 8 is molded, the nozzles 9 have the form of a partial sphere as represented in the figure 3, and are arranged in a molded housing in each lateral wall 63, 64. Said spraying device 12 as explained above can be complemented with additional nozzle(s).

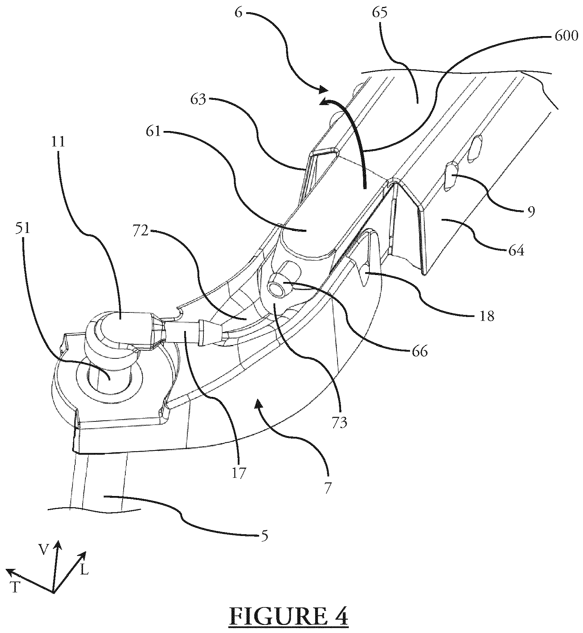

The figure 4 is a perspective view of the pivot link installed between the longitudinal part 6 and the drive member 7. The drive member 6 is represented without its cover as illustrated on figure 1. As it has been described in the figure 2, the longitudinal part 6 and the drive member 7 are interlocked one to another in a form-fitting manner. The first end 61 of the longitudinal part 6 being less large than the rest of the longitudinal part 6, the drive member 7 is able to flank the first end 61 of the longitudinal part 6 on both sides. Thereafter the longitudinal part 6 and the drive member 7 are attached, thanks to a rod 18 in particular. As described in the figure 2, each bearing of the first end 61 of the longitudinal part 6 comprises a hole. These holes associated with the rod 18 form a pivot linkage. The pivot linkage allows a swiveling 600 of the longitudinal part 6 beside the drive member 7. Such swiveling 600 could be made for example in order to change the wiper blade if the latter is worn out. Thus, the pivot linkage 18 is configured to allow a degree of freedom of the longitudinal part 6 according to a plan defined by vertical axis V and the longitudinal axis L.

The drive member 7 comprises a clearance zone 73 facing the mouthpiece 66 when the pivot linkage 18 is made. The clearance zone 73 is a zone of the drive member 7 without material between each side of the drive member 7 which flanks the first end 61 of the longitudinal part 6. The clearance zone 73 allows the swiveling 600 of the longitudinal part 6 without that the mouthpiece 66 touch or rub the surface of the drive member 7. In other words, the clearance zone 73 prevents any mechanical interferences between the longitudinal part 6 and the drive member 7 during the swiveling 600.

To make the parts visible, the duct 10 represented in the figure 3 which links the termination 17 to the mouthpiece 66 isn't represented in the figure 4. Thus, it's possible to observe a gutter 72 which is configured to receive the duct which can be extended along the drive member 7 without mechanical interferences. The duct can be deformable in order to stay linked to the mouthpiece 66 when the swiveling 600 is operated. The gutter 72 is a longitudinal aperture made in central wall that links two lateral walls of the drive member 7, said cavity opening in the clearance zone 73.

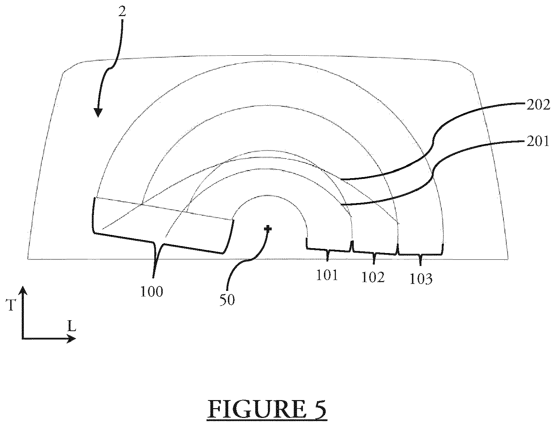

The figure 5 is a view of the glazed surface 2 where a wiping zone 100 is represented. The wiping zone 100 corresponds to a section in circular arc of the glazed surface where the wiper blade is wiping. The wiping zone 100 is divided in three zones shaped in circular arc: a first zone 101, a second zone 102 and a third zone 103. These three zones are radially adjacent one to another, the third zone 103 being further of the rotation axis 50 than the first zone 101. It has been demonstrated that to ensure a good cleaning of the glazed surface 2, the liquid has to be sprayed integrally on the second zone 102 and/or on the third zone 103.

The figures 5 illustrates two trajectories of a spraying device of a known wiper arm which is rotating around the rotation axis 50. The trajectory illustrates the line of contact where the liquid is touching the glazed surface 2. In figure 5, the wiper arm is not shown and only the rotating axis 50 is represented. The nozzle sprays some liquid according to a first trajectory 201 and a second trajectory 202. In this example, the first trajectory 201 and the second trajectory 202 are mostly inside the first zone 101 and slightly inside the second zone 102, which corresponds to inefficient trajectories for a good cleaning of the glazed surface. It is clear from this figure that the third zone 103 do not receive any liquid during the process of cleaning.

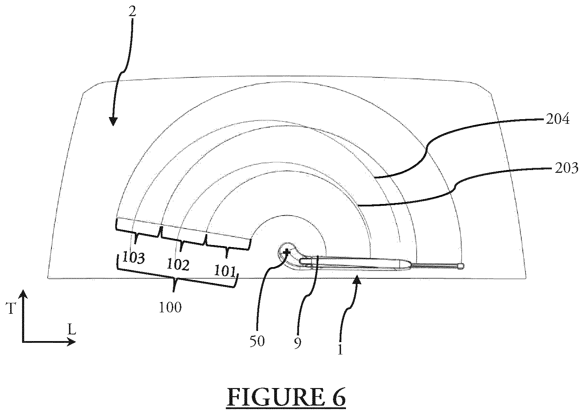

The figure 6 is a view of the glazed surface 2 which is cleaned by a wiping device 1 according to the invention. As it has been described before, the nozzles 9 are arranged on the lateral wall of an end of the wiper arm, close to the wiper member. The nozzles 9 are spraying the liquid according to a third trajectory 203 and a fourth trajectory 204. These two trajectories are mostly inside the second zone 102 and slightly inside the third zone 103. Such spraying ensures a proper repartition of the liquid on the glazed surface 2, with a better distribution of liquid on zones that are radially far from the rotational axis 50. This effect is obtained by the fact that the nozzle is installed in the arm, that is to say at a bigger distance from the rotational axis 50 than a dimension measured between nozzle and the rotational axis of the known wiping device. Furthermore, the distance between the nozzles 9 and the glazed surface 2 is maintained similar in the whole range of motion as in start position, which reinforces the proper repartition of the liquid on the glazed surface 2.

It will be understood from the foregoing that the present invention provides a wiper arm comprising a spraying device which allow to spray some liquid on a glazed surface in order to ensure an optimal cleaning of such glazed surface thanks to a specific position of the nozzle which spray the liquid.

However, the invention cannot be limited to the means and configurations described and illustrated herein, and it also extends to any equivalent means or configurations and to any technically operative combination of such means falling into the scope of the claims,

## Claims

1. Wiper arm (3) for a wiping device (1) of a vehicle, comprising a longitudinal part (6) and a drive member (7) linked one another by a pivot linkage, the longitudinal part (6) comprising a first end (61) which is linked to the drive member (7) and a second end (62) opposed to the first end (61), the drive member (7) being configured to be linked to a rotating shaft (5) which is able to set the wiper arm (3) in motion, the wiper arm (3) comprising at least a spraying device (12) configured to spray a liquid on a glazed surface (2) and a duct (10) hydraulically linked with the spraying device (12), such spraying device (12) being arranged on the
longitudinal part (6) closer to the first end (61) than to the second end (62) of the longitudinal part (6), such duct (10) extends along the drive member (7) and being configured to connect a pipe (51), which is arranged inside the rotating shaft (5), to the spraying device (12), wherein the first end (61) of the longitudinal part (6) is interlocked with the drive member (7) to form the pivot linkage, the longitudinal part (6) comprising a mouthpiece (66) arranged on the first end (61), such mouthpiece (66) allowing to connect duct (10) with the longitudinal part (6), **characterized in that** the drive member (7) comprises a clearance zone (73) which authorizes a move of the mouthpiece (66) in order to not interfere with the drive member (7).

2. Wiper arm (3) according to claim 1, wherein the spraying device (12) comprises at least a channel (8) and at least a nozzle (9), such channel (8) being formed in the material constitutive of the first end (61) of the longitudinal part (6).

3. Wiper arm (3) according to the preceding claim, wherein the longitudinal part (6) comprises two lateral walls (63, 64) linked to each other by an upper wall (65), the nozzle (9) being arranged in at least one of the lateral walls (63, 64).

4. Wiper arm (3) according to any claim 2 or 3, wherein the channel (8) comprises a main channel (81) hydraulically linked to the duct (10), the channel (8) comprising at least a secondary channel (82) which links the main channel (81) to the nozzle (9).

5. Wiper arm (3) according to the preceding claim, wherein the main channel (81) and the secondary channel (82) extend according to a rectilinear direction, a direction of the secondary channel (82) being secant to a direction of the main channel (81).

6. Wiper arm (3) according to any of the preceding claims, wherein the drive member (7) comprises a gutter (72) in order to authorize the passage of the duct (10).

7. Wiper arm (3) according to any of the preceding claims, wherein the duct (10) comprises a connector (11) configured to be arranged to the rotating shaft (5).

8. Wiper arm (3) according to the preceding claim, wherein the connector (11) comprises a cavity (16) which is configured to lead the liquid coming from the pipe (51)
of the rotating shaft (5) to the duct (10).

9. Wiping device (1) for a glazed surface (2) of a vehicle, comprising a wiper arm (3) according to any of the preceding claims and a wiper blade (4), the second end (62) of the longitudinal part (6) of the wiper arm (3) being adapted to carry the wiper blade (4).

## Patentansprüche

1. Wischerarm (3) für eine Wischvorrichtung (1) eines Fahrzeugs, umfassend einen längsverlaufenden Teil (6) und ein Antriebselement (7), die durch eine Schwenkkopplung miteinander gekoppelt sind, wobei der längsverlaufende Teil (6) ein erstes Ende (61), das mit dem Antriebselement (7) gekoppelt ist, und ein zweites Ende (62), das dem ersten Ende (61) gegenüberliegt, umfasst, wobei das Antriebselement (7) dazu ausgelegt ist, mit einer drehenden Welle (5) gekoppelt zu sein, die den Wischerarm (3) in Bewegung versetzen kann, wobei der Wischerarm (3) mindestens eine Sprühvorrichtung (12), die dazu ausgelegt ist, eine Flüssigkeit auf eine Glasfläche (2) zu sprühen, und eine Leitung (10) umfasst, die hydraulisch mit der Sprühvorrichtung (12) gekoppelt ist, wobei die Sprühvorrichtung (12) auf dem
längsverlaufenden Teil (6) näher an dem ersten Ende (61) als an dem zweiten Ende (62) des längsverlaufenden Teils (6) angeordnet ist, wobei sich die Leitung (10) entlang des Antriebselements (7) erstreckt und dazu ausgelegt ist, ein Rohr (51), das in der drehenden Welle (5) angeordnet ist, mit der Sprühvorrichtung (12) zu verbinden, wobei das erste Ende (61) des längsverlaufenden Teils (6) mit dem Antriebselement (7) verriegelt ist, um die Schwenkkopplung zu bilden, wobei der längsverlaufende Teil (6) ein Mundstück (66) umfasst, das an dem ersten Ende (61) angeordnet ist, wobei das Mundstück (66) ermöglicht, die Leitung (10) mit dem längsverlaufenden Teil (6) zu verbinden, **dadurch gekennzeichnet, dass** das Antriebselement (7) eine Spielraumzone (73) umfasst, die eine Bewegung des Mundstücks (66) zulässt, um das Antriebselement (7) nicht zu behindern.

2. Wischerarm (3) nach Anspruch 1, wobei die Sprühvorrichtung (12) mindestens einen Kanal (8) und mindestens eine Düse (9) umfasst, wobei der Kanal (8) in dem Material gebildet ist, aus dem das erste Ende (61) des längsverlaufenden Teils (6) besteht.

3. Wischerarm (3) nach dem vorstehenden Anspruch, wobei der längsverlaufende Teil (6) zwei Seitenwände (63, 64) umfasst, mit durch eine obere Wand (65) miteinander gekoppelt sind, wobei die Düse (9) in mindestens einer der Seitenwände (63, 64) angeordnet ist.

4. Wischerarm (3) nach einem der Ansprüche 2 oder 3, wobei der Kanal (8) einen Hauptkanal (81) umfasst, der hydraulisch mit der Leitung (10) verbunden ist, wobei der Kanal (8) mindestens einen Nebenkanal (82) umfasst, der den Hauptkanal (81) mit der Düse (9) koppelt.

5. Wischerarm (3) nach dem vorstehenden Anspruch, wobei sich der Hauptkanal (81) und der Nebenkanal (82) gemäß einer geradlinigen Richtung erstrecken, wobei eine Richtung des Nebenkanals (82) eine Sekante zu einer Richtung des Hauptkanals (81) ist.

6. Wischerarm (3) nach einem der vorstehenden Ansprüche, wobei das Antriebselement (7) eine Rinne (72) umfasst, um den Durchgang der Leitung (10) zuzulassen.

7. Wischerarm (3) nach einem der vorstehenden Ansprüche, wobei die Leitung (10) einen Verbinder (11) umfasst, der dazu ausgelegt ist, an der drehenden Welle (5) angeordnet zu sein.

8. Wischerarm (3) nach dem vorstehenden Anspruch, wobei der Verbinder (11) einen Hohlraum (16) umfasst, der dazu ausgelegt ist, die Flüssigkeit, die aus dem Rohr (51) der drehenden Welle (5) kommt, zu der Leitung (10) zu führen.

9. Wischvorrichtung (1) für eine Glasfläche (2) eines Fahrzeugs, umfassend einen Wischerarm (3) nach einem der vorstehenden Ansprüche und ein Wischerblatt (4), wobei das zweite Ende (62) des längsverlaufenden Teils (6) des Wischerarms (3) dazu geeignet ist, das Wischerblatt (4) zu tragen.

## Revendications

1. Bras d'essuie-glace (3) destiné à un dispositif d'essuyage (1) d'un véhicule, comprenant une partie longitudinale (6) et un élément d'entraînement (7) reliés l'un à l'autre par une liaison pivot, la partie longitudinale (6) comprenant une première extrémité (61) reliée à l'élément d'entraînement (7) et une seconde extrémité (62) opposée à la première extrémité (61), l'élément d'entraînement (7) étant conçu pour être relié à un arbre rotatif (5) qui peut mettre en mouvement le bras d'essuie-glace (3), le bras d'essuie-glace (3) comprenant au moins un dispositif de pulvérisation (12) conçu pour pulvériser un liquide sur une surface vitrée (2) et un conduit (10) relié hydrauliquement au dispositif de pulvérisation (12), lequel dispositif de pulvérisation (12) étant disposé sur la
partie longitudinale (6) plus proche de la première extrémité (61) que de la seconde extrémité (62) de la partie longitudinale (6), lequel conduit (10) s'étend le long de l'élément d'entraînement (7) et étant conçu pour raccorder un tuyau (51), qui est disposé à l'intérieur de l'arbre rotatif (5), au dispositif de pulvérisation (12), la première extrémité (61) de la partie longitudinale (6) étant verrouillée avec l'élément d'entraînement (7) pour former la liaison pivot, la partie longitudinale (6) comprenant un embout (66) disposé sur la première extrémité (61), lequel embout (66) permettant de raccorder le conduit (10) à la partie longitudinale (6), **caractérisé en ce que** l'élément d'entraînement (7) comprend une zone de dégagement (73) qui autorise un déplacement de l'embout (66) afin de ne pas interférer avec l'élément d'entraînement (7).

2. Bras d'essuie-glace (3) selon la revendication 1, le dispositif de pulvérisation (12) comprenant au moins un canal (8) et au moins une buse (9), lequel canal (8) étant formé dans le matériau constitutif de la première extrémité (61) de la partie longitudinale (6).

3. Bras d'essuie-glace (3) selon la revendication précédente, la partie longitudinale (6) comprenant deux parois latérales (63, 64) reliées entre elles par une paroi supérieure (65), la buse (9) étant disposée dans au moins une des parois latérales (63, 64).

4. Bras d'essuie-glace (3) selon l'une quelconque des revendications 2 ou 3, le canal (8) comprenant un canal principal (81) relié hydrauliquement au conduit (10), le canal (8) comprenant au moins un canal secondaire (82) qui relie le canal principal (81) à la buse (9).

5. Bras d'essuie-glace (3) selon la revendication précédente, le canal principal (81) et le canal secondaire (82) s'étendant selon une direction rectiligne, une direction du canal secondaire (82) étant sécante à une direction du canal principal (81).

6. Bras d'essuie-glace (3) selon l'une quelconque des revendications précédentes, l'élément d'entraînement (7) comprenant une gouttière (72) afin d'autoriser le passage du conduit (10).

7. Bras d'essuie-glace (3) selon l'une quelconque des revendications précédentes, le conduit (10) comprenant un raccord (11) conçu pour être disposé sur l'arbre rotatif (5).

8. Bras d'essuie-glace (3) selon la revendication précédente, le raccord (11) comprenant une cavité (16) qui est conçue pour conduire le liquide provenant du tuyau (51)
de l'arbre rotatif (5) au conduit (10).

9. Dispositif d'essuyage (1) d'une surface vitrée (2) d'un véhicule, comprenant un bras d'essuie-glace (3) selon l'une quelconque des revendications précédentes et un balai d'essuie-glace (4), la seconde extrémité (62) de la partie longitudinale (6) du bras d'essuie-glace (3) étant conçue pour porter le balai d'essuie-glace (4).
